# EUROPEAN PATENT SPECIFICATION

(11) **EP 4 238 738 B1**
(45) Date of publication and mention of the grant of the patent: **09.07.2025**
(21) Application number: 21885049.3
(22) Date of filing: 22.10.2021
(51) Int. Cl.: B29C 49/56, B29C 49/48, B29L 31/00

(54) **SINGLE MOLD OPENING MECHANISM OF A BOTTLE BLOWING MACHINE**
EINFORM-ÖFFNUNGSMECHANISMUS EINER FLASCHENBLASMASCHINE
MÉCANISME D'OUVERTURE DE MOULE UNIQUE D'UNE MACHINE DE SOUFFLAGE DE BOUTEILLES

(30) Priority: 30.10.2020 CN 202011185949
(43) Date of publication of application: 06.09.2023
(73) Proprietor: Jiangsu Newamstar Packaging Machinery Co., Ltd., Suzhou, Jiangsu 215618 (CN)
(72) Inventor: DONG, Tengzhong, Suzhou, Jiangsu 215618 (CN); LIU, Dingding, Suzhou, Jiangsu 215618 (CN); ZHANG, Xiaofei, Suzhou, Jiangsu 215618 (CN); WU, Shupeng, Suzhou, Jiangsu 215618 (CN); YU, Rongpeng, Suzhou, Jiangsu 215618 (CN)
(74) Representative: Fidal Innovation
(86) International application number: PCT/CN2021/125716
(87) International publication number: WO 2022/089322

(56) References cited:
- CN-A- 102 862 285
- CN-A- 102 922 731
- CN-A- 106 493 935
- CN-A- 110 406 076
- CN-A- 111 319 242
- CN-A- 111 319 242
- CN-A- 111 645 302
- CN-A- 111 645 302
- CN-A- 112 318 856
- CN-U- 207 495 998
- CN-U- 214 324 149
- US-B2- 10 046 503

## Description

### Technical Field of the Invention

The present disclosure relates to the field of bottle blowing techniques, and in particular to a single mold opening mechanism of a bottle blowing machine. Related prior art systems are described in US10046503B2, CN102862285A, CN207495998U, CN111319242A and CN111645302A.

### Background of the Invention

Bottle blowing machine is the key equipment for producing various plastic bottles for liquid packaging. Each process of the bottle blowing machine has strict requirements and high requirements for cooperation, in particular, there are strict requirements for the synchronous control of the opening and closing movement of the side mold of the single opening mold and the swinging and lifting movement of the bottom mold.

In the existing bottle blowing machines, a planar four-bar linkage realizes the opening and closing of the side mold, a composite mechanism formed by a cylindrical spatial cam and a spatial linkage realizes the swinging of the bottom mold and the lifting of the bottom mold, the spatial linkage realizes the swinging of the bottom mold, and the swung bottom mold is driven by the cylindrical spatial cam to lift simultaneously. The advantages of the mechanism are: simple structure and few moving parts. The disadvantages of the mechanism are: 1) the design and machining accuracy requirements of the cam flange or groove profile of the cylindrical spatial cam are high, and the installation and positioning of the cam is difficult, and the rotor is easy to jam; 2) the contact surface of the rotor and the cam profile is easy to form point contact, the pressure stress is large, and the rotor is easy to damage or the surface of the cam profile is easy to wear; 3) due to the limitation of space size, the cam pressure angle is usually too large, similarly, the rotor is easy to damage or the surface of the cam profile is easy to wear.

### Summary of the Invention

The purpose of the present disclosure is to provide a single mold opening mechanism of a bottle blowing machine, which can accurately control the movement law of the movable side mold and the bottom mold, has a simple structure and small dynamic load, and can effectively reduce the vibration and the impact of the mechanism, reduce the wear of parts, enhance the stability and reliability of the bottle blowing machine, and improve the high-speed performance of the whole machine.

To achieve the above purpose, technical solutions employed by the present disclosure are given below:
A single mold opening mechanism of a bottle blowing machine, comprises a mold frame support, a fixed side mold which is configured to be fixedly connected to the mold frame support, a mold opening/closing rotating shaft which is configured to be rotatably arranged on the mold frame support about a first axis line, a mold opening/closing rotor arm of which one end is fixedly connected to the mold opening/closing rotating shaft and which is driven by a mold opening/closing cam, a movable side mold which is configured to be fixedly connected to the mold opening/closing rotating shaft, a bottom mold support which is configured to be rotatably arranged on the mold frame support about a second axis line, a bottom mold guide rail which is configured to be fixedly connected to the bottom mold support, and a bottom mold which is configured to be arranged on the bottom mold guide rail in a liftable manner;
the single mold opening mechanism further comprises a bottom mold connecting rod of which one end is rotatably connected to the bottom mold support, and a bottom mold swing arm of which one end is rotatably connected to the other end of the bottom mold connecting rod, and the other end of the bottom mold swing arm is fixedly connected to the mold opening/closing rotating shaft;
the single mold opening mechanism further comprises a bottom mold swing rod of which one end is rotatably arranged on the bottom mold support about a third axis line, a spatial connecting rod of which two ends are hinged to the mold frame support and the other end of the bottom mold swing rod respectively by spherical surfaces in one-to-one correspondence with joint bearings fixed connected thereon, a bottom mold crank of which one end is fixedly connected to the bottom mold swing rod, and a bottom mold pull rod of which two ends are rotatably connected to the other end of the bottom mold crank and the bottom mold respectively;
the first axis line and the second axis line are respectively located on two sides of a closed mold center line; when the bottle blowing machine performs mold opening, the mold opening/closing rotating shaft is configured to drive the movable side mold to rotate away from the fixed side mold, and to drive the bottom mold support to move toward an opening of opened mold through the bottom mold swing arm and the bottom mold connecting rod; and the bottom mold support is configured to drive the bottom mold to descend through the bottom mold swing rod, the spatial connecting rod, the bottom mold crank, and the bottom mold pull rod;
a linkage mechanism formed by the mold opening/closing rotor arm and the movable side mold and the bottom mold swing arm which are configured to be together fixedly connected to the mold opening/closing rotating shaft, the bottom mold support, the bottom mold connecting rod, the mold frame support and the fixed side mold fixedly connected thereto is a planar four-bar linkage mechanism;
a linkage mechanism formed by the mold frame support, the bottom mold support, the bottom mold swing rod, and the spatial connecting rod is a spatial four-bar linkage mechanism;
a linkage mechanism formed by the bottom mold crank, the bottom mold pull rod, the bottom mold support and the bottom mold guide rail fixedly connected thereto, and the bottom mold is a planar crank-slider mechanism;
a series connection of the spatial four-bar linkage mechanism and the planar crank-slider mechanism constitutes a series combined linkage bottom mold lifting mechanism;
a series connection of the series combined linkage bottom mold lifting mechanism and the planar four-bar linkage mechanism constitutes the single mold opening mechanism.

Further, a horizontal connecting line between the first axis line and the second axis line passes through the closed mold center line.

Further, when the bottle blowing machine performs mold opening, the mold opening/closing rotating shaft is configured to drive the bottom mold support to rotate through the bottom mold swing arm and the bottom mold connecting rod, making the bottom mold to move toward the opening of the opened mold along a curve.

Further, a curve swing trajectory of the bottom mold is curved towards the movable side mold.

Further, the mold opening/closing rotating shaft is rotatably arranged on the mold frame support about its own axis line, and the first axis line, the second axis line and the closed mold center line are parallel to each other.

Further, rotational axis lines of two ends of the bottom mold connecting rod are parallel to the second axis line, respectively.

Further, the second axis line is perpendicular to the third axis line.

Further, rotational axis lines of two ends of the bottom mold pull rod are parallel to the third axis line, respectively.

Further, an angle between a motion plane of the bottom mold swing rod relative to the bottom mold support and the spatial connecting rod is **α,** wherein -30° ≤ **α** ≤ 30°.

Further, when the bottom mold is at an upper initial position, an angle between the bottom mold crank and the bottom mold pull rod is **β**, wherein 170° ≤ **β** ≤ 180°.

Further, when the bottle blowing machine is in a mold closed state, an angle between the bottom mold connecting rod and the bottom mold swing arm is γ, wherein 175° ≤ **γ** ≤ 180°; when the bottle blowing machine performs mold opening, the angle between the bottom mold connecting rod and the bottom mold swing arm decreases gradually.

Due to the application of the above technical solutions, the present disclosure has the following advantages over the prior art:
For the single mold opening mechanism of a bottle blowing machine of the present disclosure, when the bottle blowing machine performs mold opening, the mold opening/closing cam is configured to drive the bottom mold support to rotate, making the bottom mold move towards the opening of the opened mold, and the rotating bottom mold support is further configured to drive the bottom mold synchronously to descend, achieving the precise coordination of the swing and lifting of the bottom mold and the opening and closing of the side molds, and the single mold opening mechanism has advantages of:
(1) The bottom mold support drives the bottom mold to swing towards the opening of the opened mold, such that the distance of travel of the bottle taking manipulator is relatively short, it is easy to take out the bottle, and a relatively small opening angle of the movable side mold can achieve the bottle taking operation of the manipulator;
(2) Due to that the opening angle of the movable side mold is relatively small, the mold opening rotary time is relatively short, such that the mold closing rotary time can be relatively extended, the impact during mold closing is reduced, and the mold closing dynamic performance is good, which is conducive to vibration reduction and noise reduction;
(3) Due to that the bottom mold swings towards the opening of the opened mold along with the bottom mold support, the opening angle of the movable side mold is relatively small, the range of movement of the bottom mold can be designed to be relatively small, and the dynamic performance of the bottom mold is good;
(4) It can accurately control the movement law of the movable side mold and the bottom mold, has a simple structure and small dynamic load, and can effectively reduce the vibration and impact of the mechanism, reduce the wear of parts, enhance the stability and reliability of the bottle blowing machine, and improve the high-speed performance of the whole machine.

### Brief Description of the Drawings

Figure 1 is a schematic diagram I of the closed mold structure of the device of the present disclosure;
Figure 2 is a schematic diagram I of the opened mold structure of the device of the present disclosure;
Figure 3 is a schematic diagram II of the closed mold structure of the device of the present disclosure (with the mold frame support being hidden);
Figure 4 is a schematic diagram II of the opened mold structure of the device of the present disclosure (with the mold frame support being hidden);
Figure 5 is a bottom view of the closed mold (with the mold frame support being hidden);
Figure 6 is a top view of the closed mold (with the mold frame support being hidden);
Figure 7 is a bottom view of the opened mold (with the mold frame support being hidden);
Figure 8 is a top view of the opened mold (with the mold frame support being hidden).

Wherein, 1, mold frame support; 2, fixed side mold; 3, first axis line; 4, mold opening/closing rotating shaft; 5, mold opening/closing rotor arm; 6. movable side mold; 7, second axis line; 8, bottom mold support; 9, bottom mold guide rail; 10, bottom mold; 11, bottom mold connecting rod; 12, bottom mold swing arm; 13, third axis line; 14, bottom mold swing rod; 15, spatial connecting rod; 16, bottom mold crank; 17, bottom mold pull rod; 18, closed mold center line.

### Detailed Description of Exemplary Embodiments

The technical solutions of the present disclosure are further described below combining with the accompanying drawings.

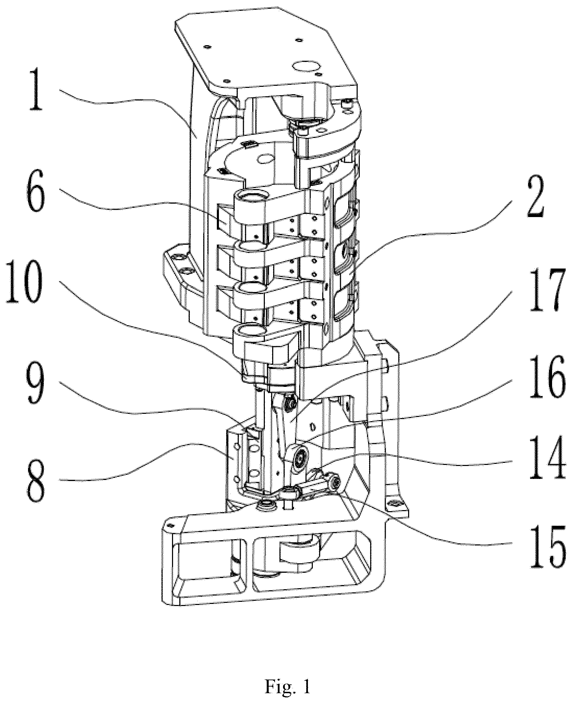

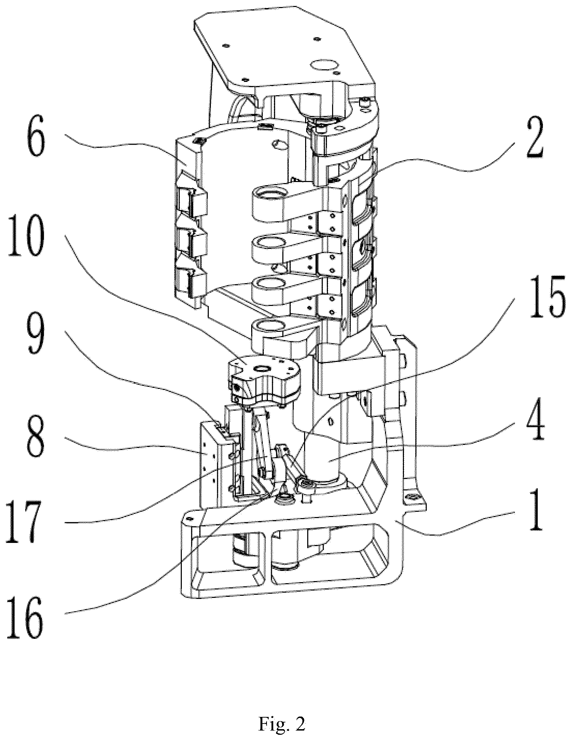

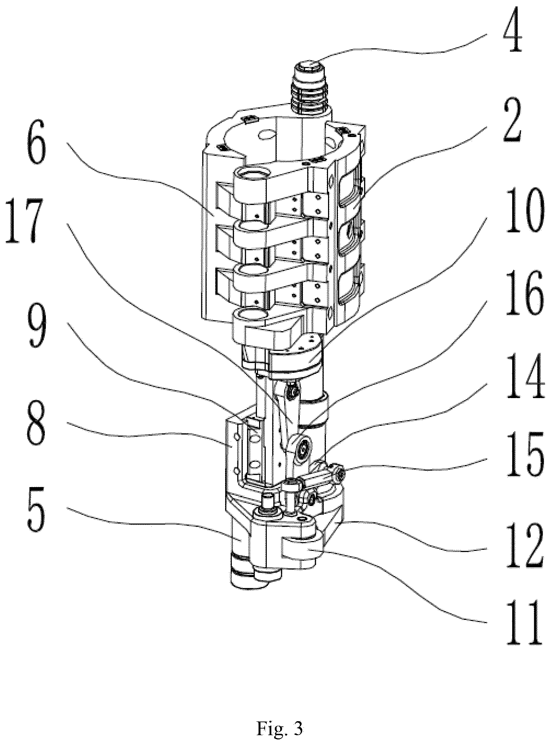

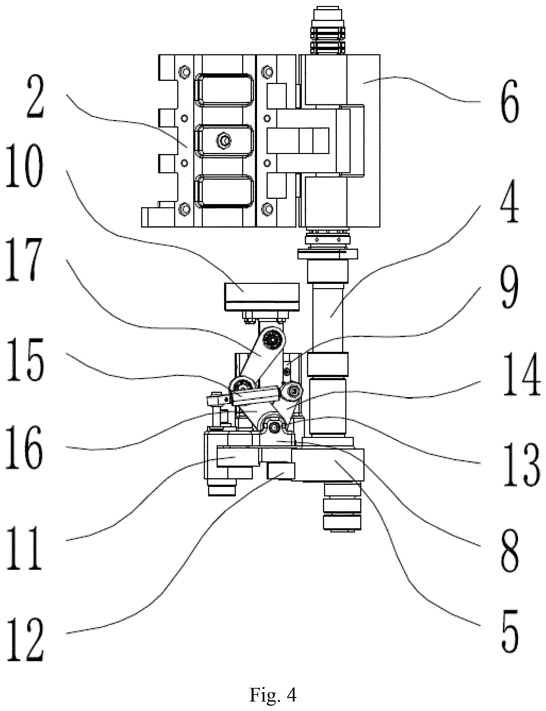

Refer to Figures 1 - 8, the aforementioned single mold opening mechanism of a bottle blowing machine, comprises a mold frame support 1, a fixed side mold 2 which is configured to be fixedly connected to the mold frame support 1, a mold opening/closing rotating shaft 4 which is configured to be rotatably arranged on the mold frame support 1 about a first axis line 3, a mold opening/closing rotor arm 5 of which one end is fixedly connected to the mold opening/closing rotating shaft 4 and which is driven by a mold opening/closing cam (not shown), a movable side mold 6 which is configured to be fixedly connected to the mold opening/closing rotating shaft 4, a bottom mold support 8 which is configured to be rotatably arranged on the mold frame support 1 about a second axis line 7, a bottom mold guide rail 9 which is configured to be fixedly connected to the bottom mold support 8, and a bottom mold 10 which is configured to be arranged on the bottom mold guide rail 9 in a liftable manner. The mold opening/closing cam acts on the other end of the mold opening/closing rotor arm 5 to drive the mold opening/closing rotating shaft 4 to rotate, making the mold opening and closing of the movable side mold 6 relative to the fixed side mold 2.

The aforementioned single mold opening mechanism further comprises a bottom mold connecting rod 11 of which one end is rotatably connected to the bottom mold support 8, and a bottom mold swing arm 12 of which one end is rotatably connected to the other end of the bottom mold connecting rod 11, and the other end of the bottom mold swing arm 12 is fixedly connected to the mold opening/closing rotating shaft 4. In this embodiment, rotational axis lines of two ends of the bottom mold connecting rod 11 extend in a vertical direction. During the rotation of the mold opening/closing rotating shaft 4, the bottom mold support 8 is driven to rotate about the second axis line 7 through the bottom mold swing arm 12 and the bottom mold connecting rod 11.

The aforementioned single mold opening mechanism further comprises a bottom mold swing rod 14 of which a lower end is rotatably arranged on the bottom mold support 8 about a third axis line 13, a spatial connecting rod 15 of which two ends are hinged to an upper end of the bottom mold swing rod 14 and the mold frame support 1 respectively by spherical surfaces in one-to-one correspondence with joint bearings fixed connected thereon, a bottom mold crank 16 of which a lower end is fixedly connected to the lower end of the bottom mold swing rod 14, and a bottom mold pull rod 17 of which two ends are rotatably connected to an upper end of the bottom mold crank 16 and the bottom mold 10 respectively. In this embodiment, rotational axis lines of two ends of the bottom mold pull rod 17 are parallel to the third axis line 13 and extend in a horizontal direction. During the rotation of the mold opening/closing rotating shaft 4, the bottom mold support 8 is rotated about the second axis line 7, the bottom mold support 8 drives the bottom mold swing rod 14 to rotate relative to the bottom mold support 8 through the spatial connecting rod 15, the bottom mold swing rod 14 drives the bottom mold crank 16 to rotate about the third axis line 13 during rotation, to drive the bottom mold 10 to descend and rise through the bottom mold pull rod 17.

The spatial connecting rod 15 here is an ordinary connecting rod, which connects two rotating shafts vertical to each other by joint bearings at two ends.

The movable side mold 6 and the fixed side mold 2 have a closed mold center line 18, the first axis line 3 and the second axis line 7 are respectively located on two sides of the closed mold center line 18, and the closed mold center line 18 is the axis line of a bottle when mold is closed. In this embodiment, the mold opening/closing rotating shaft 4 is rotatably arranged on the mold frame support 1 about its own axis line, the first axis line 3 (i.e., the axis line of the mold opening/closing rotating shaft 4), the second axis line 7 and the closed mold center line 18 are parallel to each other and extend in the vertical direction, and a horizontal connecting line between the first axis line 3 and the second axis line 7 passes through the closed mold center line 18, that is to say, the three are located in a same plane. Through this arrangement, it can avoid mutual interference between the rotation of the movable side mold 6 and the bottom mold 10 during mold opening.

A linkage mechanism formed by the mold opening/closing rotor arm 5 and the movable side mold 6 and the bottom mold swing arm 12 which are together configured to be fixedly connected to the mold opening/closing rotating shaft 4, the bottom mold support 8, the bottom mold connecting rod 11, the mold frame support 1 and the fixed side mold 2 which is configured to be fixedly connected thereto is a planar four-bar linkage mechanism; a linkage mechanism formed by the mold frame support 1, the bottom mold support 8, the bottom mold swing rod 14, and the spatial connecting rod 15 is a spatial four-bar linkage mechanism; a linkage mechanism formed by the bottom mold crank 16, the bottom mold pull rod 17, the bottom mold support 8 and the bottom mold guide rail 9 which is configured to be fixedly connected thereto, and the bottom mold 10 is a planar crank-slider mechanism; the series connection of the spatial four-bar linkage mechanism and the planar crank-slider mechanism constitutes a series combined linkage bottom mold lifting mechanism; the series connection of the series combined linkage bottom mold lifting mechanism and the planar four-bar linkage mechanism constitutes a single mold opening mechanism.

The single mold opening mechanism of the bottle blowing machine is formed by the planar four-bar linkage mechanism, the spatial four-bar linkage mechanism and the planar crank-slider mechanism, which can avoid the problems such as difficult installation and positioning, high pressure stress, easy damage to the rotor, and jamming caused by the use of cylindrical spatial cams.

When the bottle blowing machine performs mold opening, the mold opening/closing rotating shaft 4 is configured to drive the movable side mold 6 to rotate away from the fixed side mold 2 about the first axis line, and to drive the bottom mold support 8 to rotate about the second axis line through the bottom mold swing arm 12 and the bottom mold connecting rod 11, to move the bottom mold 10 toward the opening of the opened mold; the bottom mold support 8 drives the bottom mold swing rod 14 to rotate relative to the bottom mold support 8 through the spatial connecting rod 15, the bottom mold swing rod 14 drives the bottom mold crank 16 to rotate about the third axis line 13 during rotation, to drive the bottom mold 10 to descend through the bottom mold pull rod 17.

When the bottle blowing machine performs mold closing, the mold opening/closing rotating shaft 4 is configured to drive the movable side mold 6 to rotate close to the fixed side mold 2 about the first axis line, and to drive the bottom mold support 8 and the bottom mold 10 to rotate about the second axis line through the bottom mold swing arm 12 and the bottom mold connecting rod 11 to return; the bottom mold support 8 drives the bottom mold swing rod 14 to rotate relative to the bottom mold support 8 through the spatial connecting rod 15 to return, the bottom mold swing rod 14 drives the bottom mold crank 16 to rotate about the third axis line 13 during rotation to return, to drive the bottom mold 10 to rise and return through the bottom mold pull rod 17.

In this embodiment, when the bottle blowing machine performs mold opening, the mold opening/closing rotating shaft 4 is configured to drive the bottom mold support 8 to rotate through the bottom mold swing arm 12 and the bottom mold connecting rod 11, making the bottom mold 10 to move toward the opening of the opened mold along a curve. The curve swing trajectory of the bottom mold 10 is curved towards the movable side mold 6.

When a bottle taking manipulator holds a bottle and retreats to the opening of an openable and closable mold, the width of the opening of the openable and closable mold is not less than the diameter of the bottle body, so that the bottle taking manipulator can take out the bottle outward.

Compared to the prior art of mold opening, the bottom mold 10 moves in the direction away from the opening of the opened mold, in this embodiment, due to the movement trajectory of the bottle faces the opening of the opened mold, the distance of travel of the bottle taking manipulator is relatively short, the bottle can be taken out easily and quickly, it can enter the mold closing process after the removal of the bottle, and a relatively small opening angle of the movable side mold 6 can achieve the bottle taking operation of the manipulator. Due to that the opening angle of the movable side mold 6 is relatively small, the mold opening rotary time is relatively short, such that the mold closing rotary time can be relatively extended, the impact during mold closing is reduced, and the acceleration of the bottom mold 10 during rise to return is reduced.

In this embodiment, the second axis line 7 extends in the vertical direction, the third axis line 13 extends in the horizontal direction, the second axis line 7 is perpendicular to the third axis line 13, that is to say, the motion plane of the bottom mold swing rod 14 relative to the bottom mold support 8 and the motion plane of the bottom mold support 8 are perpendicular to each other.

An angle between the motion plane of the bottom mold swing rod 14 relative to the bottom mold support 8 and the spatial connecting rod 15 is **α**, wherein -30° ≤ **α** ≤ 30°. In this embodiment, -5° ≤ **α** ≤ 5°. Through the arrangement of this pressure angle, it is easy to drive the bottom mold swing rod 14 to rotate relative to the bottom mold support 8 through the spatial connecting rod 15, and reduce the wear of the mechanism.

When the aforementioned bottom mold 10 is at an upper initial position, an angle between the bottom mold crank 16 and the bottom mold pull rod 17 is **β**, wherein 170° ≤ **β** ≤ 180°. In this embodiment, 175° ≤ **β** ≤ 180°. Through this arrangement, at the beginning stage of the mold opening, as the bottom mold support 8 swings, **β** gradually increases to 180 °, then gradually decreases, forming an approximate rest period for the movement of the bottom mold in the vertical direction; during the mold closing stage, as the bottom mold support 8 swings, **β** gradually increases to 180 °, then gradually decreases, also forming an approximate rest period for the movement of the bottom mold in the vertical direction.

In both the bottom mold 10 and the side molds (including the movable side mold 6 and the fixed side mold 2), one is provided with a wedge-shaped ring groove, and the other is provided with a wedge-shaped snap ring for clamping into the wedge-shaped ring groove.

In the early stage of mold opening, the opening/closing rotor arm 5 drives the movable side mold 6 to gradually open, while driving the bottom mold 10 to swing towards the opening of the mold until the wedge-shaped ring groove and the wedge-shaped snap ring are completely separated, the single mold opening mechanism controls the displacement of the bottom mold 10 in the vertical direction to be less than the gap between the wedge-shaped snap ring and the wedge-shaped ring groove, forming an approximate rest period for the movement of the bottom mold in the vertical direction;

In the middle and later stages of mold opening, the single mold opening mechanism controls the movable side mold 6 to continue to open, while controlling the bottom mold 10 to continue to swing towards the opening of the mold, and to descend a large displacement in the vertical direction to the lowest position, without interference with the bottle taking movement of the bottle taking mechanism.

In the early and middle stage of mold closing, the single mold opening mechanism controls the movable side mold 6 to gradually close, while controlling the bottom mold 10 to swing towards the fixed side mold 2, and to rise a large displacement in the vertical direction until the wedge-shaped snap ring can enter the wedge-shaped ring groove, without interference with the blank sending movement of the blank sending mechanism;

In the later stage of mold closing, the opening/closing rotor arm 5 drives the movable side mold 6 to gradually close, while driving the bottom mold support 8 to swing towards the fixed side mold 2 until the wedge-shaped snap ring enters the wedge-shaped ring groove and they are fully aligned, the single mold opening mechanism controls the displacement of the bottom mold 10 in the vertical direction to be less than the gap between the wedge-shaped snap ring and the wedge-shaped ring groove, forming an approximate rest period for the movement of the bottom mold in the vertical direction again.

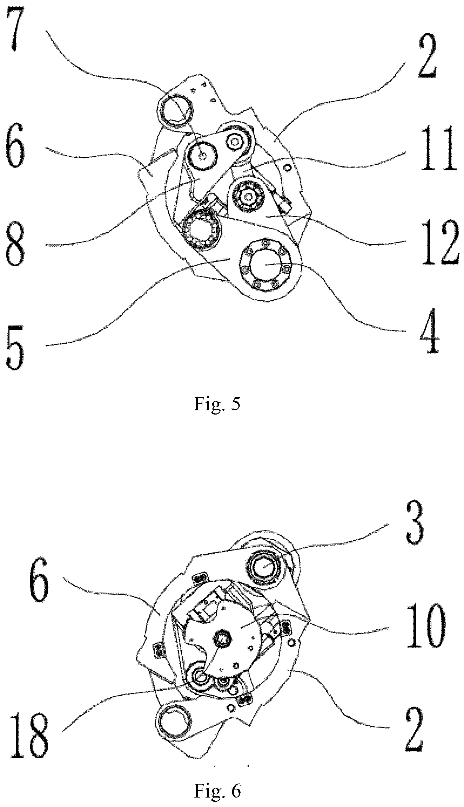

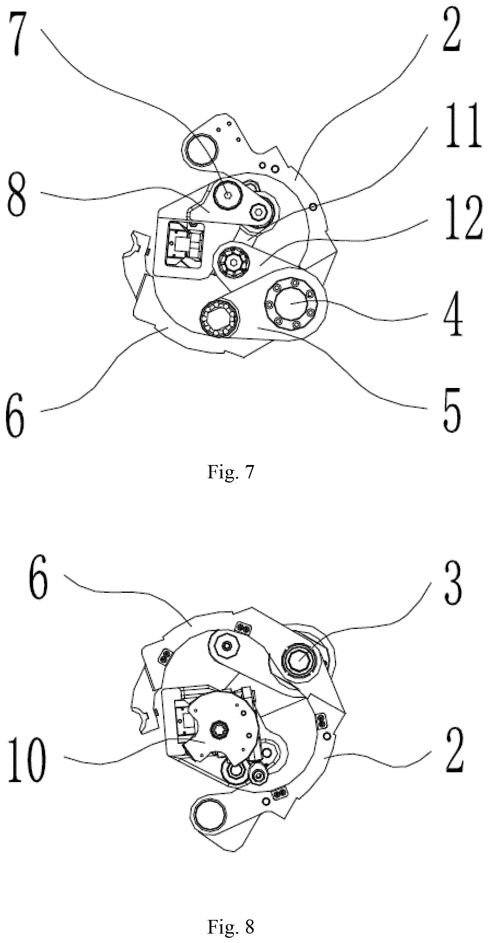

Refer to Figure 5, when the bottle blowing machine is in a mold closed state, an angle between the bottom mold connecting rod 11 and the bottom mold swing arm 12 is **γ**, wherein 175° ≤ **γ** ≤ 180°. Refer to Figure 7, when the bottle blowing machine performs mold opening, the angle between the bottom mold connecting rod 11 and the bottom mold swing arm 12 decreases gradually. Through this arrangement, during mold opening, the bottom mold support 8 is rotated slowly, which can avoid interference between the rotation of the bottom mold 10 and the movable side mold 6.

## Claims

1. A single mold opening mechanism of a bottle blowing machine, comprising a mold frame support (1), a fixed side mold (2) which is configured to be fixedly connected to the mold frame support (1), a mold opening/closing rotating shaft (4) which is configured to be rotatably arranged on the mold frame support (1) about a first axis line (3), a mold opening/closing rotor arm (5) of which one end is fixedly connected to the mold opening/closing rotating shaft (4) and which is driven by a mold opening/closing cam, a movable side mold (6) which is configured to be fixedly connected to the mold opening/closing rotating shaft (4), a bottom mold support (8) which is configured to be rotatably arranged on the mold frame support (1) about a second axis line (7), a bottom mold guide rail (9) which is configured to be fixedly connected to the bottom mold support (8), and a bottom mold (10) which is configured to be arranged on the bottom mold guide rail (9) in a liftable manner;
wherein the single mold opening mechanism further comprises a bottom mold connecting rod (11) of which one end is rotatably connected to the bottom mold support (8), and a bottom mold swing arm (12) of which one end is rotatably connected to the other end of the bottom mold connecting rod (11), and the other end of the bottom mold swing arm (12) is fixedly connected to the mold opening/closing rotating shaft (4);
**characterized in that**, the single mold opening mechanism further comprises a bottom mold swing rod (14) of which one end is rotatably arranged on the bottom mold support (8) about a third axis line (13), a spatial connecting rod (15) of which two ends are hinged to the mold frame support (1) and the other end of the bottom mold swing rod (14) respectively by spherical surfaces in one-to-one correspondence with joint bearings fixed connected thereon, a bottom mold crank (16) of which one end is fixedly connected to the bottom mold swing rod (14), and a bottom mold pull rod (17) of which two ends are rotatably connected to the other end of the bottom mold crank (16) and the bottom mold (10) respectively;
wherein the first axis line (3) and the second axis line (7) are respectively located on two sides of a closed mold center line (18); when the bottle blowing machine performs mold opening, the mold opening/closing rotating shaft (4) is configured to drive the movable side mold (6) to rotate away from the fixed side mold (2), and to drive the bottom mold support (8) to move toward an opening of opened mold through the bottom mold swing arm (12) and the bottom mold connecting rod (11); and the bottom mold support (8) is configured to drive the bottom mold (10) to descend through the bottom mold swing rod (14), the spatial connecting rod (15), the bottom mold crank (16), and the bottom mold pull rod (17);
a linkage mechanism formed by the mold opening/closing rotor arm (5) and the movable side mold (6) and the bottom mold swing arm (12) which are configured to be together fixedly connected to the mold opening/closing rotating shaft (4), the bottom mold support (8), the bottom mold connecting rod (11), the mold frame support (1) and the fixed side mold (2) fixedly connected thereto is a planar four-bar linkage mechanism;
a linkage mechanism formed by the mold frame support (1), the bottom mold support (8), the bottom mold swing rod (14), and the spatial connecting rod (15) is a spatial four-bar linkage mechanism;
a linkage mechanism formed by the bottom mold crank (16), the bottom mold pull rod (17), the bottom mold support (8) and the bottom mold guide rail (9) fixedly connected thereto, and the bottom mold (10) is a planar crank-slider mechanism;
a series connection of the spatial four-bar linkage mechanism and the planar crank-slider mechanism constitutes a series combined linkage bottom mold lifting mechanism;
a series connection of the series combined linkage bottom mold lifting mechanism and the planar four-bar linkage mechanism constitutes the single mold opening mechanism.

2. The single mold opening mechanism of a bottle blowing machine according to claim 1, **characterized in that**, a horizontal connecting line between the first axis line (3) and the second axis line (7) passes through the closed mold center line (18).

3. The single mold opening mechanism of a bottle blowing machine according to claim 2, **characterized in that**, when the bottle blowing machine performs mold opening, the mold opening/closing rotating shaft (4) is configured to drive the bottom mold support (8) to rotate through the bottom mold swing arm (12) and the bottom mold connecting rod (11), making the bottom mold (10) to move toward the opening of the opened mold along a curve.

4. The single mold opening mechanism of a bottle blowing machine according to claim 3, **characterized in that**, a curve swing trajectory of the bottom mold (10) is curved towards the movable side mold (6).

5. The single mold opening mechanism of a bottle blowing machine according to claim 1, **characterized in that**, the mold opening/closing rotating shaft (4) is rotatably arranged on the mold frame support (1) about its own axis line (3), and the first axis line (3), the second axis line (7) and the closed mold center line (18) are parallel to each other.

6. The single mold opening mechanism of a bottle blowing machine according to claim 5, **characterized in that**, rotational axis lines of two ends of the bottom mold connecting rod (11) are parallel to the second axis line (7), respectively.

7. The single mold opening mechanism of a bottle blowing machine according to claim 1, **characterized in that**, the second axis line (7) is perpendicular to the third axis line (13).

8. The single mold opening mechanism of a bottle blowing machine according to claim 1, **characterized in that**, rotational axis lines of two ends of the bottom mold pull rod (17) are parallel to the third axis line (13), respectively.

9. The single mold opening mechanism of a bottle blowing machine according to claim 1, **characterized in that**, an angle between a motion plane of the bottom mold swing rod (14) relative to the bottom mold support (8) and the spatial connecting rod (15) is α, wherein -30° ≤ α ≤ 30°.

10. The single mold opening mechanism of a bottle blowing machine according to claim 1, **characterized in that**, when the bottom mold (10) is at an upper initial position, an angle between the bottom mold crank (16) and the bottom mold pull rod (17) is β, wherein 170° ≤ β ≤ 180°.

11. The single mold opening mechanism of a bottle blowing machine according to claim 1, **characterized in that**, when the bottle blowing machine is in a mold closed state, an angle between the bottom mold connecting rod (11) and the bottom mold swing arm (12) is γ, wherein 175° ≤ γ ≤ 180°; when the bottle blowing machine performs mold opening, the angle between the bottom mold connecting rod (11) and the bottom mold swing arm (12) decreases gradually.

## Patentansprüche

1. Ein Einzelform-Öffnungsmechanismus einer Flaschenblasmaschine bestehend aus
einem Formrahmenträger (1), einer festen Seitenform (2), die ausgelegt ist, um fest mit dem Formrahmenträger (1) verbunden zu sein, einer Formöffnungs-/Formschließ-Drehwelle (4), die ausgelegt ist, um drehbar auf dem Formrahmenträger (1) um eine erste Achsenlinie (3) angeordnet zu sein, einem Formöffnungs-/Formschließ-Dreharm (5), der an einem Ende fest mit der Formöffnungs-/Schließdrehwelle (4) verbunden ist und der angetrieben ist durch einen
Formöffnungs-/Formschließ-Nocken, einer beweglichen Seitenform (6), die so ausgelegt ist, dass sie fest mit der Formöffnungs-/Formschließ-Drehwelle (4) verbunden ist, einem Bodenformträger (8), der so ausgelegt ist, dass er drehbar auf dem Formrahmenträger angeordnet ist
(1) um eine zweite Achsenlinie (7), einer Bodenformführungsschiene (9), die zur festen Verbindung mit dem Bodenformträger (8) ausgebildet ist, und eine Bodenorm (10), die
so ausgelegt ist, dass sie auf der unteren Bodenformführungsschiene (9) anhebbar ist;
wobei der Einzelform-Öffnungsmechanismus ferner eine Bodenform-Verbindungsstange (11) umfasst, die an einem Ende drehbar mit dem Bodenformträger (8) und einem Bodenform-Schwenkarm (12) verbunden ist, der an einem Ende drehbar mit dem anderen Ende der Bodenform-Verbindungsstange (11) verbunden ist, und das andere
Ende des unteren Bodenform-Schwenkarms (12) fest mit der Formöffnungs-/Formschließ-Drehwelle (4) verbunden ist;
**dadurch gekennzeichnet, dass** der Einzelform-Öffnungsmechanismus ferner eine Bodenform-Schwenkstange (14) umfasst, die an einem Ende um eine dritte Achsenlinie (13) drehbar auf dem Bodenformträger (8) angeordnet ist, eine räumliche Verbindungsstange (15), deren
beide Enden am Formrahmenträger (1) am anderen Ende der Bodenform-Schwenkstange (14) durch kugelförmige Flächen in eins-zu-eins-Entsprechung mit daran befestigten Gelenklagern angehängt sind, einer Bodenformkurbel,
(16), die an einem Ende fest mit der Bodenform-Schwenkstange (14) verbunden ist, und einer Bodenform-Zugstange (17), deren zwei Enden drehbar mit dem anderen
Ende der Bodenformkurbel (16) bzw. der Bodenform (10) verbunden sind;
wobei die erste Achsenlinie (3) und die zweite Achsenlinie (7) jeweils auf zwei Seiten einer Mittellinie (18) der geschlossenen Form angeordnet sind; wenn die Flaschenblasmaschine eine Formöffnung durchführt, ist die Formöffnungs-/Formschließ-Drehwelle (4) so ausgelegt, dass sie die bewegliche Seitenform (6) antreibt, um sich weg zu drehen von der festen
Seitenform (2) und den Bodenformträger (8) antreibt, um sich durch den Bodenform-Schwenkarm (12) und die Bodenform-Verbindungsstange(11) zur Öffnung der geöffneten Form zu bewegen; und der Bodenformträger (8) ist so ausgelegt, dass er die Bodenform (10) durch die Bodenform-Schwenkstange (14), die räumliche Verbindungsstange (15), die Bodenformkurbel (16) und die Bodenformzugstange zum Absenken antreibt (17);
einem Verbindungsmechanismus, der durch den Formöffnungs-/Formschließ-Dreharm (5) und die bewegliche Seitenform (6) und den Bodenform-Schwenkarm (12) gebildet wird, die so konfiguriert sind, dass sie zusammen fest verbunden sind mit der Formöffnungs-/Formschließ-Drehwelle (4), dem Bodenformträger (8), der Bodenformverbindungsstange (11), dem
Formrahmenträger (1) und der damit befestigen festen Seitenform (2), wobei ein Viergelenkmechanismus damit verbunden ist;
einem Verbindungsmechanismus, der gebildet wird durch den Formrahmenträger (1), den Bodenformträger (8), die Bodenform-Schwenkstange (14) und die räumliche Verbindungsstange (15) ist ein räumlicher Viergelenkmechanismus;
einem Verbindungsmechanismus, der durch die Bodenformkurbel (16), die Bodenformzugstange (17), den Bodenformträger (8) und die Bodenformführungsschiene (9) gebildet wird, die fest damit verbunden sind, und die Unterform (10) ist ein ebener Kurbelschiebermechanismus;
eine Reihenverbindung des räumlichen Viergelenkmechanismus und des ebenen Kurbelschiebermechanismus bildet eine Reihe kombinierter Verbindungsmechanismen zum Anheben der Bodenform;
eine Reihenverbindung der Reihe kombinierter Verbindungsmechanismen zum Anheben der Bodenform und der ebene Viergelenkmechanismus bildet den Einzelform-Öffnungsmechanismus.

2. Der Einzelform-Öffnungsmechanismus einer Flaschenblasmaschine gemäß Anspruch 1, **dadurch gekennzeichnet, dass** eine horizontale Verbindungslinie zwischen der ersten Achsenlinie (3) und der zweiten Achsenlinie (7) durch die Mittellinie (18) der geschlossenen Form verläuft.

3. Der Einzelform-Öffnungsmechanismus einer Flaschenblasmaschine gemäß Anspruch 2, **dadurch gekennzeichnet, dass**, wenn die Flaschenblasmaschine die Formöffnung durchführt, die Formöffnungs-/Formschließ-Drehwelle (4) so konfiguriert ist, dass sie die Bodenformhalterung (8) über den Bodenformschwenkarm (12) und die
Bodenform-Verbindungsstange (11) in Drehung versetzt, wodurch die Bodenform (10) entlang einer Kurve in Richtung der Öffnung der geöffneten Form bewegt wird.

4. Einzelform-Öffnungsmechanismus einer Flaschenblasmaschine gemäß Anspruch 3, **dadurch gekennzeichnet, dass** eine Schwingkurvenbahn der Bodenform (10) zur beweglichen Seitenform (6) hin gebogen ist.

5. Einzelform-Öffnungsmechanismus einer Flaschenblasmaschine gemäß Anspruch 1, **dadurch gekennzeichnet, dass** die Formöffnungs-/Formschließ-Drehwelle (4) am Formrahmenträger (1) um ihre eigene Achsenlinie (3) drehbar angeordnet ist, und die erste Achsenlinie (3), die zweite Achsenlinie (7) und die Mittellinie der geschlossenen Form (18) parallel zueinander verlaufen.

6. Einzelform-Öffnungsmechanismus einer Flaschenblasmaschine gemäß Anspruch 5, **dadurch gekennzeichnet, dass** die Drehachsenlinien der beiden Enden der Bodenform-Verbindungsstange (11) parallel zur zweiten Achsenlinie (7) verlaufen.

7. Einzelform-Öffnungsmechanismus einer Flaschenblasmaschine gemäß Anspruch 1, **dadurch gekennzeichnet, dass** die zweite Achsenlinie (7) senkrecht zur dritten Achsenlinie (13) verläuft.

8. Einzelform-Öffnungsmechanismus einer Flaschenblasmaschine gemäß Anspruch 1, **dadurch gekennzeichnet, dass** die Drehachsenlinien der beiden Enden der Bodenform-Zugstange (17) jeweils parallel zur dritten Achsenlinie (13) verlaufen.

9. Einzelform-Öffnungsmechanismus einer Flaschenblasmaschine gemäß Anspruch 1, **dadurch gekennzeichnet, dass** ein Winkel zwischen einer Bewegungsebene der Unterform-Schwenkstange (14) relativ zum Bodenformträger (8) und der räumlichen Verbindungsstange (15) *a* beträgt, wobei -30°≤α≤30°.

10. Der Einzelform-Öffnungsmechanismus einer Flaschenblasmaschine gemäß Anspruch 1, **dadurch gekennzeichnet, dass**, wenn sich die Bodenform (10) in einer oberen Ausgangsposition befindet, ein Winkel zwischen der BodenformKurbel (16) und der Bodenform-Zugstange (17) 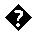 beträgt, wobei 170°≤β≤180°.

11. Der Einzelform-Öffnungsmechanismus einer Flaschenblasmaschine gemäß Anspruch 1, **dadurch gekennzeichnet, dass**, wenn sich die Flaschenblasmaschine im Formschließzustand befindet, ein Winkel zwischen der Bodenform-Verbindungsstange (11) und dem Bodenform-Schwenkarm (12) γ beträgt, wobei 175°≤γ≤180°; wenn die Flaschenblasmaschine die Form öffnet, sich der Winkel zwischen der Bodenform-Verbindungsstange (11) und dem Bodenform-Schwenkarm (12) allmählich verringert.

## Revendications

1. Un mécanisme d'ouverture de moule unique d'une machine de soufflage de bouteilles, comprenant un support de cadre de moule (1), un moule latéral fixe (2) qui est configuré pour être relié de manière fixe au support de cadre de moule (1), un arbre rotatif d'ouverture/fermeture de moule (4) qui est configuré pour être disposé de manière rotative sur le support de cadre de moule (1) autour d'une première ligne d'axe (3), un bras de rotor d'ouverture/fermeture de moule (5) dont une extrémité est reliée de manière fixe à l'arbre rotatif d'ouverture/fermeture de moule (4) et qui est entraîné par une came d'ouverture/fermeture de moule, un moule latéral mobile (6) qui est configuré pour être relié de manière fixe à l'arbre rotatif d'ouverture/fermeture de moule (4), un support de moule inférieur (8) qui est configuré pour être disposé de manière rotative sur le support de cadre de moule (1) autour d'une seconde ligne d'axe (7), un rail de guidage de moule inférieur (9) qui est configuré pour être relié de manière fixe au support de moule inférieur (8), et un moule inférieur (10) qui est configuré pour être disposé sur le rail de guidage de moule inférieur (9) d'une manière relevable ;
dans lequel le mécanisme d'ouverture de moule unique comprend en outre une tige de liaison de moule inférieur (11) dont une extrémité est reliée de manière rotative au support de moule inférieur (8), et un bras oscillant de moule inférieur (12) dont une extrémité est reliée de manière rotative à l'autre extrémité de la tige de liaison de moule inférieur (11), et l'autre extrémité du bras oscillant de moule inférieur (12) est reliée de manière fixe à l'arbre rotatif d'ouverture/fermeture de moule (4) ;
**caractérisé en ce que** le mécanisme d'ouverture de moule unique comprend en outre une tige pivotante de moule inférieur (14) dont une extrémité est disposée de manière rotative sur le support de moule inférieur (8) autour d'une troisième ligne d'axe (13), une tige spatiale (15) dont deux extrémités sont articulées au support de cadre de moule (1) et à l'autre extrémité de la tige pivotante de moule inférieur (14) respectivement par des surfaces sphériques en correspondance biunivoque avec des paliers d'articulation fixés sur ceux-ci, une manivelle de moule inférieur (16) dont une extrémité est reliée de manière fixe à la tige pivotante de moule inférieur (14), et une tige de traction de moule inférieur (17) dont deux extrémités sont reliées de manière rotative à l'autre extrémité de la manivelle de moule inférieur (16) et au moule inférieur (10) respectivement ;
dans lequel la première ligne d'axe (3) et la deuxième ligne d'axe (7) sont respectivement situées sur deux côtés d'une ligne centrale de moule fermée (18) ; lorsque la machine de soufflage de bouteilles effectue l'ouverture du moule, l'arbre rotatif d'ouverture/fermeture de moule (4) est configuré pour entraîner le moule latéral mobile (6) à s'écarter en tournant du moule latéral fixe (2), et pour entraîner le support de moule inférieur (8) à se déplacer vers une ouverture de moule ouvert par l'intermédiaire du bras oscillant de moule inférieur (12) et de la tige de moule inférieur (11) ; et le support de moule inférieur (8) est configuré pour entraîner le moule inférieur (10) à descendre par l'intermédiaire de la tige oscillante de moule inférieur (14), de la tige spatiale (15), de la manivelle de moule inférieur (16) et de la tige de traction de moule inférieur (17) ;
un mécanisme de liaison formé par le bras de rotor d'ouverture/fermeture de moule (5) et le moule latéral mobile (6) et le bras oscillant de moule inférieur (12) qui sont configurés pour être ensemble reliés de manière fixe à l'arbre rotatif d'ouverture/fermeture de moule (4), le support de moule inférieur (8), la tige de moule inférieur (11), le support de cadre de moule (1) et le moule latéral fixe (2) reliés de manière fixe à celle-ci est un mécanisme de liaison plan à quatre barres ;
un mécanisme de liaison formé par le support de cadre de moule (1), le support de moule inférieur (8), la tige pivotante de moule inférieur (14) et la tige spatiale (15) est un mécanisme de liaison spatiale à quatre barres ;
un mécanisme de liaison formé par la manivelle de moule inférieur (16), la tige de traction de moule inférieur (17), le support de moule inférieur (8) et le rail de guidage de moule inférieur (9) qui lui est relié de manière fixe, et le moule inférieur (10) est un mécanisme à manivelle-curseur plan ;
une connexion en série du mécanisme de liaison spatiale à quatre barres et du mécanisme à manivelle-curseur plan constitue un mécanisme de levage de moule inférieur à liaison combinée en série ;
une connexion en série du mécanisme de levage de moule inférieur à liaison combinée en série et du mécanisme de liaison à quatre barres plan constitue le mécanisme d'ouverture de moule unique.

2. Mécanisme d'ouverture de moule unique d'une machine de soufflage de bouteilles selon la revendication 1, **caractérisé en ce qu'**une ligne de liaison horizontale entre la première ligne d'axe (3) et la deuxième ligne d'axe (17) passe par la ligne centrale du moule fermé (18).

3. Mécanisme d'ouverture de moule unique d'une machine de soufflage de bouteilles selon la revendication 2, **caractérisé en ce que**, lorsque la machine de soufflage de bouteilles effectue l'ouverture du moule, l'arbre rotatif d'ouverture/fermeture de moule (4) est configuré pour entraîner le support de moule inférieur (8) en rotation par l'intermédiaire du bras oscillant de moule inférieur (12) et de la tige de moule inférieur (11), ce qui fait que le moule inférieur (10) se déplace vers l'ouverture du moule ouvert le long d'une courbe.

4. Mécanisme d'ouverture de moule unique d'une machine de soufflage de bouteilles selon la revendication 3, **caractérisé en ce qu'**une trajectoire d'oscillation courbe du moule inférieur (10) est courbée vers le moule latéral mobile (6).

5. Mécanisme d'ouverture de moule unique d'une machine de soufflage de bouteilles selon la revendication 1, **caractérisé en ce que** l'arbre rotatif d'ouverture/fermeture de moule (4) est disposé de manière rotative sur le support de cadre de moule (1) autour de sa propre ligne d'axe (3), et la première ligne d'axe (3), la deuxième ligne d'axe (7) et la ligne centrale de moule fermé (18) sont parallèles les unes aux autres.

6. Mécanisme d'ouverture de moule unique d'une machine de soufflage de bouteilles selon la revendication 5, **caractérisé en ce que** les lignes d'axe de rotation des deux extrémités de la tige de liaison de moule inférieur (11) sont respectivement parallèles à la deuxième ligne d'axe (7).

7. Mécanisme d'ouverture de moule unique d'une machine de soufflage de bouteilles selon la revendication 1, **caractérisé en ce que** la deuxième ligne d'axe (7) est perpendiculaire à la troisième ligne d'axe (13).

8. Mécanisme d'ouverture de moule unique d'une machine de soufflage de bouteilles selon la revendication 1, **caractérisé en ce que** les lignes d'axe de rotation des deux extrémités de la tige de traction de moule inférieur (17) sont respectivement parallèles à la troisième ligne d'axe (13).

9. Mécanisme d'ouverture de moule unique d'une machine de soufflage de bouteilles selon la revendication 1, **caractérisé en ce qu'**un angle entre un plan de mouvement de la tige pivotante de moule inférieur (14) par rapport au support de moule inférieur (8) et la tige de liaison spatiale (10) est α, dans lequel -30° ≤ α ≤ 30°.

10. Mécanisme d'ouverture de moule unique d'une machine de soufflage de bouteilles selon la revendication 1, **caractérisé en ce que**, lorsque le moule inférieur (10) est dans une position initiale supérieure, un angle entre la manivelle de moule inférieur (16) et la tige de traction de moule inférieur (17) est β, dans lequel 170° ≤ β ≤ 180°.

11. Mécanisme d'ouverture de moule unique d'une machine de soufflage de bouteilles selon la revendication 1, **caractérisé en ce que**, lorsque la machine de soufflage de bouteilles est dans un état de moule fermé, un angle entre la tige de liaison de moule inférieur (11) et le bras oscillant de moule inférieur (12) est γ, dans lequel 175° ≤ γ ≤ 180° ; lorsque la machine de soufflage de bouteilles effectue l'ouverture du moule, l'angle entre la tige de liaison de moule inférieur (11) et le bras oscillant de moule inférieur (12) diminue progressivement.
